# EUROPÄISCHE PATENTSCHRIFT

(11) **EP 2 020 011 B1**
(45) Veröffentlichungstag und Bekanntmachung des Hinweises auf die Patenterteilung: **28.01.2015**
(21) Anmeldenummer: 07724593.4
(22) Anmeldetag: 26.04.2007
(51) Int. Cl.: H01H 9/24, H01H 31/00, H01H 3/22, H02B 11/133

(54) **SCHALTGERÄT FÜR EINE ELEKTRISCHE SCHALTANLAGE ZUR ENERGIEVERTEILUNG**
SWITCHING DEVICE FOR AN ELECTRICAL SWITCHGEAR ASSEMBLY FOR ENERGY DISTRIBUTION
APPAREIL DE COMMUTATION POUR INSTALLATION DE DISTRIBUTION ÉLECTRIQUE POUR LA DISTRIBUTION D'ELECTRICITE

(30) Priorität: 23.05.2006 DE 102006024007
(43) Veröffentlichungstag der Anmeldung: 04.02.2009
(73) Patentinhaber: ABB Technology AG, 8050 Zürich (CH)
(72) Erfinder: PETERS, Hauke, 63457 Hanau (DE); KUHL, Daniel, 60386 Frankfurt (DE)
(74) Vertreter: Kock, Ina
(86) Internationale Anmeldenummer: PCT/EP2007/003663
(87) Internationale Veröffentlichungsnummer: WO 2007/134692

(56) Entgegenhaltungen:
- EP-A- 1 271 588
- GB-A- 1 005 694

## Beschreibung

Elektrische Schaltanlagen zur Energieverteilung weisen eine anwendungsspezifische Kombination verschiedener Schaltgeräte, darunter auch Trenn- und Erdungsschalter, auf. Moderne Schaltanlagen kombinieren dabei die Funktionen Trennen und Erden, in dem ein Kontaktsystem in drei entsprechende Stellungen gebracht werden kann. Eine solche Schaltanlage weist zwei Funktionseinheiten - einen Trenner und einen Erder - auf. Dazu ist ein Dreistellungsantrieb erforderlich. Für den Notbetrieb ist ein Handbetrieb der Schaltanlage vorgesehen.

Elektrische Schaltanlagen zur Energieverteilung sind z.B. aus der Druckschrift EP 1 569 254 bekannt.

In der EP 1 271 588 A1 und GB 1 005 694 A1 sind weitere Schaltgeräte für eine elektrische Schaltanlage zur Energieverteilung offenbart, wobei hier jeweils eine Funktionseinheit für die Funktion Erden und eine Funktionseinheit für die Funktion Trennen vorgesehen sind und ein Handbetrieb für jede der beiden Funktionseinheiten einstellbar ist. Die Einstellung des Handbetriebes einer der beiden Funktionseinheiten kann durch ein bewegliches Bedienelement der jeweiligen Funktionseinheit die Einstellung des Handbetriebs der anderen Funktionseinheit blockieren.

Eine zu lösende Aufgabe besteht darin, ein Schaltgerät für eine elektrische Schaltanlage zur Energieverteilung anzugeben, das Sicherheitsanforderungen an Schaltanlagen für Hochstromanwendungen genügt und eine hohe Sicherheit bezüglich der Bedienungsfehler hat.

Gemäß einer ersten bevorzugten Ausführungsform wird ein Schaltgerät für eine elektrische Schaltanlage zur Energieverteilung angegeben, das eine erste Funktionseinheit für die Funktion Erden und eine zweite Funktionseinheit für die Funktion Trennen umfasst, wobei ein Handbetrieb zumindest einer der beiden Funktionseinheit einstellbar ist. Bei der Einstellung des Handbetriebs der ersten Funktionseinheit wird durch ein bewegliches Bedienelement dieser Funktionseinheit die Einstellung des Handbetriebs der zweiten Funktionseinheit blockiert. Bei der Einstellung des Handbetriebs der zweiten Funktionseinheit wird durch ein bewegliches Bedienelement dieser Funktionseinheit die Einstellung des Handbetriebs der ersten Funktionseinheit blockiert.

Das bewegliche Bedienelement jeder Funktionseinheit ist in den folgenden Betriebsstellungen einstellbar:
A) (bzw. D)) Handbetrieb-Stellung,
B) (bzw. E)) Neutralstellung, in der die Schaltanlage elektrisch betrieben wird,
C) (bzw. F)) Blockiert-Stellung, in der die Funktionseinheit blockiert ist, wobei weder elektrische Antrieb noch eine manuelle Änderung des Zustands des Schaltgeräts möglich ist.

Die Stellungen B) und C) der beiden Bedienelemente sind unabhängig voneinander einstellbar. In der Stellung B) und C) blockieren die beweglichen Bedienelemente einander nicht. Bein der Raststellung A) eines Bedienelements wird durch die Kulisse dieses Bedienelements die Einstellung der Rastposition A) des anderen Bedienelements blockiert.

Die gegenseitige Blockierung der Einstellung des Handbetriebes ist eine wichtige Eigenschaft für die Sicherheitsfunktion bei Handbetrieb des Antriebs.

Der Handbetrieb ist aus Sicherheitsgründen vorzugsweise mit mindestens einem Sicherheitselement ausgerüstet, d. h. mit einer elektrischen Schaltung, die den Handbetrieb freigibt.

Die Freigabe des elektrisch betriebenen Sperrelementes erfolgt je nach Schaltzustand der Schaltanlage für die Erder- und Trennseite getrennt.

Die Schaltanlage umfasst dazu vorzugsweise ein elektrisch betriebenes Sperrelement, durch das das bewegliche Bedienelement bei nicht freigegebenem Handbetrieb für die Versetzung in die Handbetrieb-Stellung verriegelt ist. Beim Versuch der Einstellung des Handbetriebs z.B. für die Trennerseite wird eine Sicherheitsinformation zur Freigabe des Handbetriebs abgefragt. Bei freigegebenem Handbetrieb für z.B. die Trennerseite wird das elektrisch betriebene Sperrelement eingezogen und somit das bewegliche Bedienelement entriegelt.

Das bewegliche Bedienelement z.B. der Trennerseite kann nun in die eigentliche Stellung für die Handbetätigung (A) bzw. D) überführt werden. Hierbei wird eine Öffnung zum Einführen eines Hilfselementes, z.B. einer Handkurbel, freigegeben. Gleichzeitig wird durch die geometrische Ausformung und Anordnung der Bedienelemente zueinander verhindert, dass die nicht freigegebene Seite des Schaltgerätes, z.B. die Erderseite, in die Stellung A) bzw. D) bewegt werden kann.

Das elektrisch betriebene Sperrelement nimmt bei nicht freigegebenem Handbetrieb eine erste Position ein, bei der die Bewegung des beweglichen Bedienelements der beiden Funktionseinheiten in die Handbetrieb-Stellung verhindert wird. Bei Freigabe des Handbetriebs wird das elektrisch betriebene Sperrelement durch eine elektrische Ansteuerung in eine zweite Position überführt, bei der das bewegliche Bedienelement entriegelt ist.

Gemäß einer zweiten bevorzugten Ausführungsform wird ein Schaltgerät für eine elektrische Schaltanlage zur Energieverteilung angegeben, das eine erste Funktionseinheit für die Funktion Erden, eine zweite Funktionseinheit für die Funktion Trennen und ein elektrisch betriebenes Sperrelement umfasst. Ein Handbetrieb beider Funktionseinheit ist einstellbar. Jede Funktionseinheit weist ein bewegliches Bedienelement auf, das bei nicht freigegebenem Handbetrieb für die Versetzung in die Handbetrieb-Stellung durch das elektrisch betriebene Sperrelement verriegelt ist. Beim Versuch der Einstellung des Handbetriebs wird eine Sicherheitsinformation zur Freigabe des Handbetriebs abgefragt. Bei freigegebenem Handbetrieb wird das elektrisch betriebene Sperrelement betätigt und somit das bewegliche Bedienelement entriegelt.

Im Folgenden werden Merkmale erläutert, die im Zusammenhang mit beiden Ausführungsformen auftreten können, die jedoch nicht unbedingt notwendig sind.

Das erste Bedienelement umfasst eine erste Kulisse und das zweite Bedienelement eine zweite Kulisse. Diese Kulissen sind zueinander bewegbar. Jede Kulisse ist mit einem von Hand zu betätigenden Griff fest verbunden. Der Griff kann durch die Kulisse hindurch geführt sein. Ein Teil des Griffs kann eine Betätigungsnocken bilden, der an ein Betätigungselement eines Schalters gekoppelt ist.

Die Kulissen sind geometrisch so ausgestaltet, dass sie in einer von der Handbetrieb-Stellung abweichenden Betriebsstellung der Bedienelemente einander nicht blockieren. Unter einer Kulisse versteht man beispielsweise eine dünne Platte oder ein Blech.

Bei der Handbetrieb-Stellung der ersten Kulisse wird durch diese das Versetzen der zweiten Kulisse in die der Handbetrieb-Stellung entsprechenden Position verhindert. Bei der Handbetrieb-Stellung der zweiten Kulisse wird durch diese das Versetzen der ersten Kulisse in die der Handbetrieb-Stellung entsprechenden Position verhindert.

Das elektrisch betriebene Sperrelement ist vorzugsweise zwischen den Kulissen der ersten und zweiten Funktionseinheit angeordnet.

Die Schaltanlage umfasst vorzugsweise ein Arretierelement, mit dem das ungewollte Umschalten zwischen den verschiedenen Betriebsstellungen verhindert werden kann. Das Arretierelement umfasst vorzugsweise eine Zugfeder und einen Bedienknopf. Das Arretierelement kann versenkbar sein. Das Arretierelement oder der Bedienknopf weist vorzugsweise einen Bereich mit verengtem Querschnitt auf, der zwischen zwei Bereichen mit breiterem Querschnitt angeordnet ist.

Jede Kulisse weist vorzugsweise eine kanalförmige Öffnung auf, deren Breite außerhalb der als Rastposition vorgesehenen Bereiche kleiner ist als die Querschnittgröße der breiten Bereiche des Arretierelements. In als Rastposition vorgesehenen Bereichen weist die kanalförmige Öffnung eine Breite auf, die größer ist als die Querschnittsgröße der breiten Bereiche des Arretierelements.

Jedes Bedienelement weist vorzugsweise eine Betätigungsnocken auf, der mit der Kulisse der jeweiligen Funktionseinheit fest verbunden ist. Der Betätigungsnocken kann eine Vertiefung aufweisen, in die ein Betätigungselement eines elektrischen Schalters hineinragt. Das Profil der Vertiefung ist in Verschiebungsrichtung so dimensioniert, dass das Betätigungselement beim Verschieben des Bedienelements zwischen den Betriebsstellungen in Vertikalrichtung verschoben wird. Das Betätigungselement des elektrischen Schalters weist vorzugsweise federnde Eigenschaften auf. Es kann z.B. eine gebogene oder gefaltete Blattfeder sein.

Der elektrische Schalter ist vorzugsweise mit einer Sicherheitsschaltung zur Auswertung der Sicherheitsinformation elektrisch verbunden.

Die Kulissen sind in einem Ausführungsbeispiel in einer Längsrichtung gegeneinander verschiebbar. Die Kulissen werden vorzugsweise jeweils durch eine Schiene geführt, entlang der sie gleiten können. Dabei wird bei der Handbetrieb-Stellung der ersten Kulisse durch diese Kulisse das Verschieben der zweiten Kulisse in die der Handbetrieb-Stellung entsprechende Position verhindert. Umgekehrt wird bei der Handbetrieb-Stellung der zweiten Kulisse durch diese Kulisse das Verschieben der ersten Kulisse in die der Handbetrieb-Stellung entsprechenden Position verhindert.

Das erste Bedienelement umfasst in einer Variante eine um eine erste Drehachse schwenkbare erste Kulisse und das zweite Bedienelement eine um eine zweite Drehachse schwenkbare zweit Kulisse. Bei der Schwenkung der ersten Kulisse wird eine Änderung der Betriebsstellung des ersten Bedienelements bewirkt. Bei der Schwenkung der zweiten Kulisse wird eine Änderung der Betriebsstellung des zweiten Bedienelements bewirkt.

Die Kulissen sind vorzugsweise gegeneinander schwenkbar. Die schwenkbaren Kulissen werden auch Kulissenhebel genannt.

Die erste Kulisse weist vorzugsweise einen Vorsprung auf, der bei Einstellung von Position A) des ersten Bedienelements in eine Ausnehmung der zweiten Kulisse schwenkt und bei jener das Einstellen der Handbetrieb-Stellung dadurch blockiert. Die zweite Kulisse weist analog dazu ebenfalls einen Vorsprung auf, der bei Einstellung von Position A) des zweiten Bedienelements in eine Ausnehmung der ersten Kulisse schwenkt und bei jeder das Einstellen der Handbetrieb-Stellung dadurch blockiert.

Bei der Handbetrieb-Stellung der ersten Kulisse wird durch diese Kulisse das Schwenken der zweiten Kulisse in die der Handbetrieb-Stellung entsprechenden Position verhindert. Analog dazu wird bei der Handbetrieb-Stellung der zweiten Kulisse durch diese Kulisse das Schwenken der ersten Kulisse in die der Handbetrieb-Stellung entsprechende Position verhindert.

Jede Funktionseinheit umfasst eine bei freigegebenem Handbetrieb manuell zu betätigende Handkurbelwelle, die in einer von der Handbetrieb-Stellung abweichenden Betriebsstellung des Bedienelements dieser Funktionseinheit durch die Kulisse dieses Bedienelements abgedeckt ist. In einer vorteilhaften Variante weist jede Kulisse eine Ausnehmung auf, die in der Handbetrieb-Stellung so positioniert wird, dass die Handkurbelwelle freigelegt ist.

Jedes Bedienelement kann einen Stopper umfassen, der mit der Kulisse dieses Bedienelements fest verbunden ist. Die Handkurbelwelle weist vorzugsweise Vorsprünge auf, die sich in Radialrichtungen, also einer zur Drehachse der Kurbelwelle senkrechten Richtung, erstrecken und in der Blockier-Stellung bei der Drehung der Handkurbelwelle gegen den Stopper anschlagen.

Der Griff kann einen Bereich mit verengtem Querschnitt aufweisen, der zwischen zwei Bereichen mit breiterem Querschnitt angeordnet ist. Im Zusammenhang damit umfasst die Schaltanlage vorzugsweise eine Deckplatte, die im Bereich der ersten Kurbelwelle eine erste Öffnung und im Bereich der zweiten Kurbelwelle eine zweite Öffnung aufweist. Die Deckplatte weist pro Funktionseinheit eine kanalförmige Öffnung auf, deren Breite außerhalb der als Rastposition vorgesehenen Bereiche kleiner ist als die Querschnittsgröße der breiteren Bereiche des Griffs. In als Rastposition vorgesehenen Bereichen weist die kanalförmige Öffnung eine Breite auf, die zumindest so groß ist wie die Querschnittsgröße der breiteren Bereiche des Griffs.

In einer weiteren Ausführungsform kann durch ein Rückstellelement z.B. in Form einer M-förmigen Rückstellfeder, das Bedienelement nach dem Entriegeln der Arretierung in die Neutralstellung B) bzw. E) zurückgeführt werden.

Der Griff ist vorzugsweise an ein Betätigungselement eines elektrischen Schalters gekoppelt, der mit der Schaltung zur Auswertung der Sicherheitsinformation elektrisch verbunden ist. Die Schaltung zur Auswertung der Sicherheitsinformation ist vorzugsweise mit einem Hubmagnet elektrisch verbunden, der bei Freigabe des Handbetriebs durch die Schaltung zur Auswertung der Sicherheitsinformation das Sperrelement einzieht.

Zwischen den Kulissen in Stellung B) ist ein Freiraum vorhanden, der durch Verschieben einer der Kulissen in Stellung A) soweit abgedeckt wird, dass ein Verschieben der anderen Kulisse in Stellung A) blockiert ist.

Die Handbedienungsverriegelung kann prinzipiell mittels linear verschiebbaren Bedienelementen, die z.B. Schiebekulissen umfassen, oder mittels schwenkbaren Bedienelementen, die z.B. Hebel und insbesondere Kulissenhebel umfassen, realisiert sein. Die Handbedienungsverriegelung wird derart ausgeführt, dass über die Bedienelemente und Hubmagneten eine eindeutige Bedienerführung unter Berücksichtigung von Verriegelungs- und Sicherheitsbedingungen erzielt wird. Dazu ist nur ein einziger Hubmagnet erforderlich, da durch entsprechende Verriegelung gewährleistet ist. Außerdem ist ein separates Blockieren der einzelnen Funktionen (Trenner / Erder) möglich, da sowohl in der Kulisse als auch in der Deckplatte pro Funktionseinheit jeweils ein Handkurbelloch vorhanden ist.

Des weiteren werden Ausführungsbeispiele anhand von schematischen und nicht maßstabgetreuen Figuren erläutert. Es zeigen:
- Figur 1A: die Draufsicht eines Schaltgerätes mit schwenkbaren Kulissenhebeln;
- Figur 1B: die Vorderansicht des Schaltgerätes gemäß der Figur 1A in Neutralstellung;
- Figur 2A: die Draufsicht eines Schaltgerätes mit linear verschiebbaren Kulissen;
- Figur 2B: die Vorderansicht des Schaltgerätes gemäß der Figur 2A in Neutralstellung;
- Figur 3: die Vorderansicht des Schaltgerätes gemäß der Figur 2A bei Verschiebung aus der Neutralstellung in die Handbetrieb-Stellung bei noch nicht freigegebenem Handbetrieb;
- Figur 4: die Vorderansicht des Schaltgerätes gemäß der Figur 2A in der Handbetrieb-Stellung bei freigegebenem Handbetrieb;
- Figur 5: die Vorderansicht des Schaltgerätes gemäß der Figur 2A in der Blockier-Stellung.

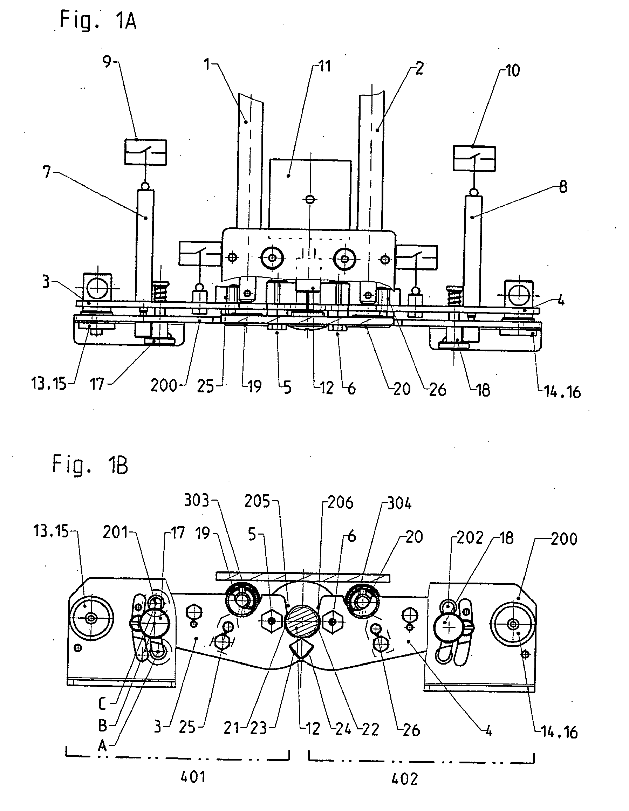

In Figuren 1A, 1B ist ein Ausführungsbeispiel einer Schaltanlage mit schwenkbaren Bedienelementen gezeigt. Die Schaltanlage umfasst zwei Funktionseinheiten: einen Trenner 401 (links) und einen Erder 402 (rechts). Diese Funktionseinheiten sind vorzugsweise symmetrisch bezüglich einer Symmetrieachse, die durch den Mittelpunkt de Anlage läuft.

Die Handbedienungsverriegelung umfasst zwei Handkurbelwellen 1 (für Trenner) und 2 (für Erder). Diesen Kurbelwellen sind zwei Kulissenhebel 3, 4 zugeordnet. Der Kulissenhebel 3 ist am Drehpunkt 5 und der Kulissenhebel 4 am Drehpunkt 6 gelagert. An jedem Kulissenhebel ist ein Betätigungsnocken 7, 8 angebracht, der beim Drehen auf das Betätigungselement eines Schaltelements 9, 10 wirkt.

Die Schaltelemente 9, 10 dienen zum elektrischen Verriegeln und Absteuern. Jedes Schaltelement ist elektrisch mit eine nachgeschalteten Sekundärtechnikkreis verbunden und zur Abfrage einer Sicherheitsinformation geeignet. Die Betätigungsnocken 7, 8 sind auf die Erfordernisse der Sekundärtechnik angepasst ausgeführt.

Zwischen den Kulissenhebeln 3, 4 befindet sich ein Verriegelungsmagnet 11 mit einem elektrisch betriebenen Sperrelement 12 (Verriegelungszapfen). Die Kulissenhebel sind mit einem herausnehmbaren Arretierelement 13, 14 ausgerüstet, der eine Öffnung 15, 16 zum Einhängen eines Bügelschlosses aufweist. Das Arretierelement 13, 14 ist vorzugsweise ein Sperrbolzen. Der Kulissenhebel 3, 4 ist mit einem Betätigungsgriff 17, 18 fest verbunden, der in drei Stellungen A, B, C rastbar ist. Das Umschalten zwischen den Stellungen A, B, C erfolgt manuell mithilfe des Griffs 17, 18.

Die Raststellung A steht für Handkurbelbetrieb/Notbetrieb. Die Raststellung B steht für die Neutralstellung, in der die Schaltanlage elektrisch beschrieben wird (Normalbetrieb). Die Raststellung C ist die Blockiert-Stellung, in der die Schaltanlage blockiert ist, so dass sie weder elektrisch noch mechanisch umgeschaltet werden kann.

Die Kulissenhebel 3, 4 sind derart gestaltet und relativ zueinander positioniert, dass diese drei Raststellungen möglich sind.

Die Schaltanlage umfasst eine Deckplatte 200, die pro Funktionseinheit eine Öffnung 201, 202 aufweist. Diese Öffnung ist kanalförmig geformt und mit Verbreiterungen an den Stellen ausgebildet, die die Raststellungen A, B und C des Bedienelements definieren. Die Deckplatte 200 weist pro Funktionseinheit ein Handkurbelloch 19, 20 auf.

Der Kulissenhebel 3, 4 weist eine erste Ausnehmung 205, 206 mit einem Berührungsbereich 21, 22 auf. Der Berührungsbereich 21, 22 bewegt sich bei Überführung des jeweiligen Bedienelements in Stellung A in Richtung des Sperrelements 12. Bei nicht freigegebenem Handbetrieb wird der Berührungsbereich 21, 22 durch das Sperrelement 12 blockiert, bevor die Rastposition A durch den Griff 17, 18 erreicht wird. Der Kulissenhebel 3, 4 weist außerdem einen Verriegelungsvorsprung 23, 24 auf. Der Kulissenhebel 3, 4 weist eine zweite Ausnehmung 303, 304 auf, die in den Rastpositionen B, C das Handkurbelloch 19, 20 zumindest teilweise überdeckt.

In dem Kulissenhebel 3, 4 ist ein Loch vorgesehen, durch das der Sperrbolzen 13 gesteckt wird. Vorzugsweise sind in der Deckplatte 200 drei Öffnungen vorgesehen, durch die der Sperrbolzen 13 in den Rastpositionen A, B, C durchgesteckt werden kann. Es kann aber auch eine einzige Öffnung sein.

Es wird nun die Funktionsweise einer Funktionseinheit des Schaltgerätes für den Trenner erklärt. Die Beschreibung gilt aber auch ohne Einschränkung für den Erder.

In der Neutralstellung B werden die Handkurbellöcher 19, 20 von einem Teil des Kulissenhebels 3, 4 abgedeckt. Falls eine Handbetätigung in Position A (z. B. beim Trenner) erfolgen soll, wird zunächst der Sperrbolzen 13 entfernt. Danach wird der Betätigungsgriff 17 aus der Raststellung B oder C gezogen und in Richtung der Raststellung A bewegt.

Bevor der Berührungsbereich 21 des Kulissenhebels 3 eine Position erreicht, an der der Verriegelungszapfen 12 angeordnet ist, wird über den Betätigungsnocken 7 das Schaltelement 9 betätigt, wobei die Abfrage der Freigabe des Handbetriebs veranlasst wird. Falls der Handbetrieb freigegeben ist, zieht der Verriegelungsmagnet 11 den Verriegelungszapfen 12 ein, so dass der Kulissenhebel 3 entriegelt wird und in die Rastposition A überführt werden kann.

Um zu verhindern, dass bei eingezogenem Sperrelement 12 nun auch der Kulissenhebel 4 der rechten Funktionseinheit in die Rastposition A überführt werden kann, wird der Verriegelungsvorsprung 23 des Kulissenhebels 3 in die erste Ausnehmung 206 des Kulissenhebels 4 geschwenkt. Der Kulissenhebel 4 wird dabei durch den Verriegelungsvorsprung 23 bezüglich der Überführung in die Raststellung A blockiert. Somit wird durch die Raststellung A einer Kulisse die Kulisse der anderen Funktionseinheit so verriegelt, dass sie die Raststellung A nicht einnehmen kann.

In der Rastposition A rastet der Betätigungsgriff 17 ein. Dabei wird erreicht, dass die zweite Ausnehmung 303 des Kulissenhebels 3 das Handkurbelloch 19 komplett freilegt. Somit wird der Zutritt zur Handkurbelwelle 1 ermöglicht. Die Handkurbelwelle 1 weist vorzugsweise mindestens ein Rastelement auf, so dass eine Handkurbel für die Betätigung der Kurbelwelle eingreifen kann (Schlüssel/Schloss-Prinzip). Die Handkurbel wird durch die Öffnung 19 der Deckplatte 200 und die zweite Ausnehmung 303 des Kulissenhebels 3 gesteckt. Das Rastelement ist in der Variante gemäß den Figuren 1A, 1 B als radialer Vorsprung ausgeführt. Die Handkurbel weist eine Vertiefung auf, die komplementär dazu ausgebildet ist. Umgekehrt ist es auch möglich, die Kurbelwelle mit einer Vertiefung und die Handkurbel mit einem komplementären Vorsprung auszuführen.

Die linke Funktionseinheit ist in der Rastposition A elektrisch durch das Schaltelement 9 blockiert, das durch den Betätigungsnocken 7 betätigt wird. Je nach Ausführung der Sekundärtechnik kann in dieser Stellung ebenso die rechte Funktionseinheit elektrisch gegen Betätigung blockiert sein.

Falls bei der Anfrage über den Nocken 7 keine Freigabe des Handbetriebs erfolgt, bleibt der Verriegelungszapfen 12 im ausgefahrenen Zustand, wodurch der Kulissenhebel 3 blockiert und nicht in die Rastposition A überführt werden kann. Das Handkurbelloch 19 ist weiterhin von einem Teil des Kulissenhebels 3 abgedeckt, so dass die Handkurbelwelle für den Benutzer nicht zugänglich ist.

Falls die linke Funktionseinheit ausgehend aus der Neutralstellung B blockiert werden soll, wird der Kulissenhebel 3 in die Rastposition C gebracht. Vor der Überführung in die Rastposition C muss der Sperrbolzen 13 wieder entfernt werden. Danach wird der Betätigungsgriff 17 aus der Raststellung gezogen und in Richtung Position C bewegt. Beim Erreichen der Stellung C rastet der Betätigungsgriff 17 ein. Danach wird der Sperrbolzen 13 wieder gesteckt. Gleichzeitig wird über den Betätigungsnocken 7 die linke Funktionseinheit elektrisch verriegelt und mit Hilfe des Stoppers 25 die Handkurbelwelle 1 mechanisch blockiert. In die Bohrung 15 des Sperrbolzens 13 kann ein Schloss eingehängt werden.

Für die Blockierung der Funktionseinheit in der Raststellung C wird der Verriegelungsmagnet 11 vorzugsweise nicht betätigt. Dies ist wichtig, damit die Handkurbelabfrage für die andere Funktionseinheit weiterhin aktiviert bleibt, so dass die rechte Funktionseinheit - bis auf die Raststellung A - unabhängig von der linken Funktionseinheit bedient werden kann.

Die Kulissenhebel 3, 4 sind derart gestaltet, dass der Kulissenhebel 4 - unter Berücksichtigung der Freigabe aus der Sekundärtechnik - bewegt werden kann, auch wenn sich der Hebel 3 in der Rastposition C oder B befindet. Beide Seiten des Antriebes können also separat verriegelt werden. Aber der Handkurbelbetrieb ist jeweils immer nur für eine Funktionseinheit möglich, wenn er nach Abfrage der Sicherheitsinformationen freigegeben ist. In Neutralstellung B ist de elektrische Betrieb gewährleistet.

Die rechte Funktionseinheit umfasst einen Stopper 26 und einen Sperrbolzen 14, der eine Bohrung 16 aufweist. Der Sperrbolzen 14 ist wie der Sperrbolzen 13 ausgeführt. Die Bohrung 16 entspricht der Bohrung 15. Der Stopper 26 entspricht dem Stopper 25.

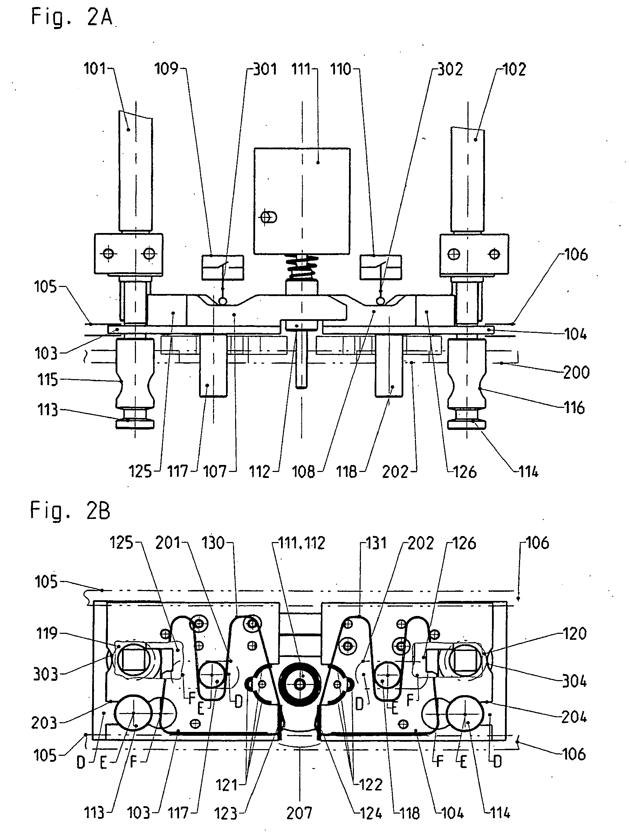

Gemäß einer weiteren, in den Figuren 2A bis 5 erläuterten Ausführungsformen wird die Handbedienungsverriegelung mit linearer verschiebbaren Schiebern 103, 104 ausgeführt. Die in Fig. 1A, 1B gezeigten Drehpunkte 5, 6 sind dabei durch Linearführungen 105, 106 ersetzt. Eine Linearführung umfasst vorzugsweise zumindest eine Schiene. Die mit den Elementen 1, 2 und 7 bis 24 vergleichbaren Elemente sind auch in dieser Variante vorhanden und erhalten für eine leichtere Gegenüberstellung eine um 100 erhöhte Nummerierung.

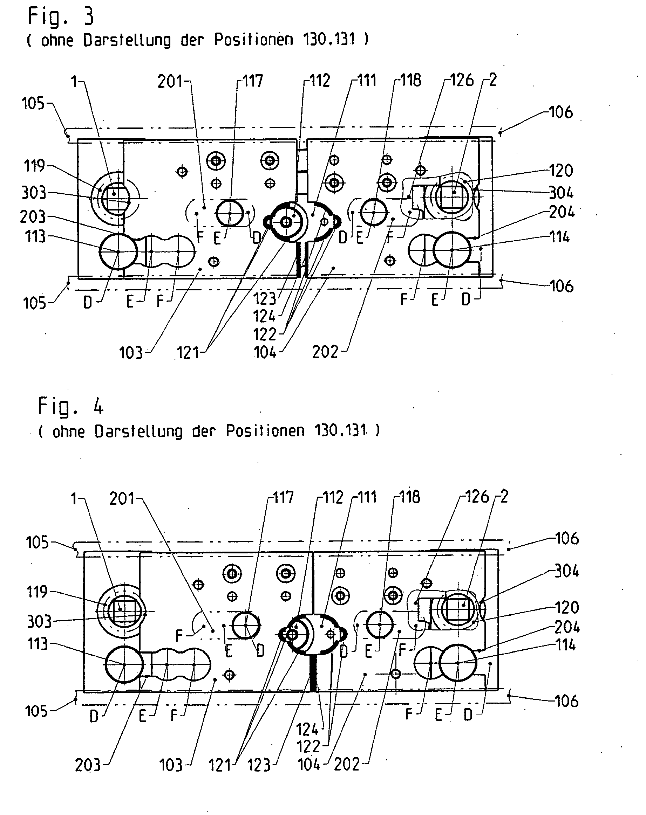

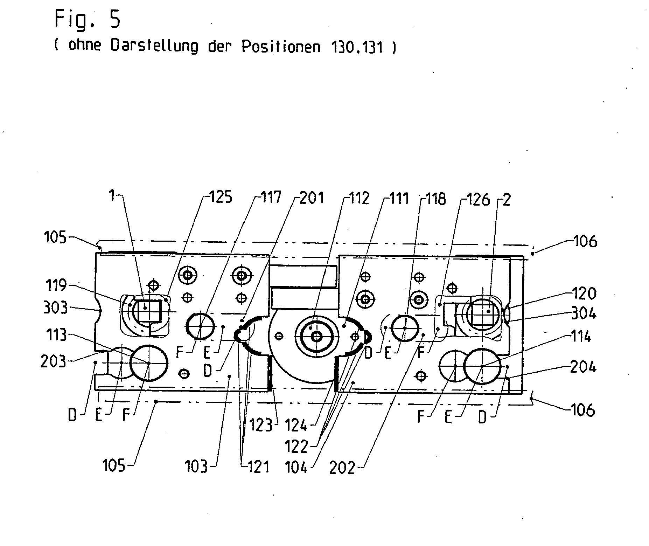

In den Figuren 2A, 2B ist die Neutralstellung E der beweglichen Bedienelemente der beiden Funktionseinheiten gezeigt. In der Figur 3 ist die Überführung des Bedienelements der linken Funktionseinheit von der Stellung E in die Stellung D und in der Figur 4 die Stellung D dieses Bedienelements gezeigt. In der Figur 5 ist die Stellung F dieses Bedienelements gezeigt.

Die Schieber haben drei Rastpositionen D, E, F. Die Rastposition D entspricht der Rastposition A der Variante mit schwenkbaren Kulissenhebeln. Die Rastposition E entspricht der Rastposition B und die Rastposition F der Rastposition C.

Die Schieber 103, 104 sind derart gestaltet und relativ zueinander positioniert, dass diese drei Raststellungen möglich sind. Auch in dieser Variante weist jede Kulisse 103, 104 eine zweite Ausnehmung 303, 304 auf, die ebenfalls zur Freilegung der Handkurbelwelle bei freigegebenem Handbetrieb vorgesehen ist. Jede Schiebekulisse 103, 104 weist außerdem eine dritte Ausnehmung 203, 204 auf, die im Wesentlichen so ausgestaltet ist wie die Öffnungen 201, 202 der Deckplatte 200 in der Variante gemäß Fig. 1B. Die dritte Ausnehmung 203, 204 ist kanalförmig mit Verbreiterungen an den Stellen ausgebildet, die die Raststellungen D, E und F des Bedienelements definieren.

Der Sperrbolzen 113, 114 umfasst vorzugsweise einen versenkbaren Bedienknopf, der in den Rastpositionen D, E, F aus der Deckplatte 200 herausragt. Der Sperrbolzen 113, 114 umfasst ferner eine Zugfeder. Der Sperrbolzen 113, 114 ist bei dieser Variante so ausgeführt, dass er federbelastet versenkt, d.h. reingedrückt werden kann. Nach der Versenkung des Sperrbolzens 113, 114 kann der Schieber 103, 104 betätigt werden. Der Sperrbolzen 113 übernimmt die Funktion "Rastierung" vom Betätigungsgriff 17 der Variante gemäß den Figuren 1A und 1B. Im Gegensatz zu de Variante gemäß Fig. 1A, 1B ist die Öffnung 201, 202 der Deckplatte 200 kanalförmig ohne verbreiterte Bereiche in den Rastpositionen durchgeführt. Ansonsten gelten die gleichen Bedingungen. Die für den Griff 17, 18 beschriebenen Merkmale sind ohne Einschränkung auf den Sperrbolzen 113, 114 übertragbar. Insbesondere weist der Sperrbolzen 113, 114 wie der Griff 17, 18 einen Bereich mit einem verengten Querschnitt auf. Der Sperrbolzen 113, 114 weist wie der Sperrbolzen 13, 14 eine Bohrung 115, 116 zum Durchstecken eines Bügelschlosses auf.

Die Raststellung D steht für Handkurbelbetrieb/Notbetrieb. Die Raststellung E steht für die Neutralstellung, in der die Schaltanlage elektrisch betrieben wird (Normalbetrieb). Die Raststellung F ist die Blockiert-Stellung, in der die Schaltanlage blockiert ist, so dass sie weder elektrisch noch mechanisch umgeschaltet werden kann.

Zwischen den Schiebekulissen 101, 102 in Stellung E) ist ein Freiraum 207 vorhanden, der durch Verschieben einer de Schiebekulissen in Stellung D) soweit abgedeckt wird, dass ein Verschieben der anderen Schiebekulisse in Stellung D) blockiert ist.

In der Neutralstellung E werden die Handkurbellöcher 119, 120 der Deckplatte 200 von eine Teil des Schiebers 103, 104 abgedeckt. Soll nun eine Handbetätigung in die Rastposition D (z.B. für die linke Funktionseinheit) erfolgen, wird zunächst der Sperrbolzen 113 gedrückt. Danach wird der Betätigungsgriff 117 in Richtung der Rastposition D bewegt.

Bevor der Berührungsbereich 121 der Schieberkulisse 103 eine Position erreicht, an der der Verriegelungszapfen 112 angeordnet ist, wird über den Betätigungsnocken 107 das Schaltelement 109 betätigt, wobei die Abfrage der Freigabe des Handbetriebs veranlasst wird. Falls der Handbetrieb freigegeben ist, zieht der Verriegelungsmagnet 111 den Verriegelungszapfen 112 ein, so dass die Schieberkulisse 103 entriegelt wird und in die Rastposition D überführt werden kann.

Um zu verhindern, dass bei eingezogenem Sperrelement 112 nun auch die Schiebekulisse 104 der rechten Funktionseinheit in die Rastposition D überführt werden kann, wird - in der Rastposition D der Schieberkulisse 103 - der Schieber 104 durch den Verriegelungsbereich 123 des Schiebers 103 bezüglich der Überführung in die Raststellung D blockiert. Somit wird durch die Raststellung D einer Schieberkulisse die Schieberkulisse der anderen Funktionseinheit so verriegelt, dass sie die Raststellung D nicht einnehmen kann.

In der Rastposition D rastet der Sperrbolzen 113 ein. Dabei wird erreicht, dass die zweite Ausnehmung 303 der Schieberkulisse 103 das Handkurbelloch 119 komplett freilegt. Somit wird der Zugriff zur Handkurbelwelle 101 ermöglicht.

Die linke Funktionseinheit ist in der Rastposition D elektrisch durch das Schaltelement 109 blockiert, das durch den Betätigungsnocken 107 betätigt wird. Je nach Ausführung der Sekundärtechnik kann in dieser Stellung ebenso die rechte Funktionseinheit elektrisch gegen Betätigung blockiert sein.

Falls bei der Anfrage über den Nocken 107 keine Freigabe des Handbetriebes erfolgt, bleibt der Verriegelungszapfen 112 im ausgefahrenen Zustand, wodurch die Schieberkulisse 103 blockiert und nicht in die Rastposition D überführt werden kann. Das Handkurbelloch 119 ist weiterhin zumindest von einem Teil der Schieberkulisse 103 abgedeckt, so dass die Handkurbelwelle für den Benutzer nicht zugänglich ist.

Falls die linke Funktionseinheit ausgehend von der Neutralstellung E blockiert werden soll, wird die Schieberkulisse 103 in die Rastposition F gebracht. Vor der Überführung in die Rastposition F wird der Sperrbolzen 13 gedrückt. Danach wird der Betätigungsgriff 117 in Richtung der Rastposition F bewegt. Beim Erreichen der Stellung F rastet der Sperrbolzen 113 ein. Gleichzeitig wird über den Betätigungsnocken 107 die linke Funktionseinheit elektrisch verriegelt und mit Hilfe des Stoppers 125 die Handkurbelwelle 101 mechanisch blockiert. In die Bohrung 115 des Sperrbolzens 113 kann ein Schloss eingehängt werden

Für die Blockierung der Funktionseinheit in der Raststellung F wird der Verriegelungsmagnet 111 vorzugsweise nicht betätigt. Dies ist wichtig, damit die Handkurbelabfrage für die andere Funktionseinheit weiterhin aktiviert bleibt, so dass die rechte Funktionseinheit in den Raststellungen E, F unabhängig von der linken Funktionseinheit bedient werden kann.

Die Schiebekulissen 103, 104 sind derart gestaltet, dass die Schieberkulisse 104 - unter Berücksichtigung der Freigabe aus der Sekundärtechnik - bewegt werden kann, auch wenn sich der Schieber 103 in Position F oder E befindet.

Beide Seiten des Antriebs können also separat verriegelt werden. Aber der Handkurbelbetrieb ist jeweils immer nur für eine Funktionseinheit möglich, wenn er nach Abfrage der Sicherheitsinformation freigegeben ist. In Neutralstellung E ist der elektrische Betrieb gewährleistet.

Der Betätigungsnocken 117, 118 weist eine Vertiefung auf, in die ein Betätigungselement 301, 302 eines elektrischen Schalters 109, 110 hineinragt. Das Profil der Vertiefung ist in Verschiebungsrichtung so dimensioniert, dass das Betätigungselement 301, 302 beim Verschieben des Bedienelements zwischen den Betriebsstellungen in Vertikalrichtung verschoben wird. Das Betätigungselement des elektrischen Schalters 109, 110 kann z. B. eine Blattfeder sein.

Das angegebene Schaltgerät ist nicht auf die vorgestellten Beispiele beschränkt. Die Anzahl und die Form der gezeigten Elemente kann beliebig gewählt sein, um die beschriebene Funktionsweise der Funktionseinheit zu realisieren.

So können z.B. die Sperrbolzen 113, 114 so ausgeführt werden, dass sie zum Verriegeln der Kulisse 103, 104 in der Position D, E, F gegen ein Federelement gezogen werden müssen. In gezogenem Zustand lässt sich der Sperrbolzen 113, 114 über die Bohrung 115, 116 mit einem z.B. Bügelschloss verriegeln. Wird das Bügelschloss entfernt, zieht das Federelement den Sperrbolzen zurück und gibt die Kulissen 103, 104 frei. Diese wird, wenn sie sich vorher in der Position D) oder F) befindet über eine Rückholfeder 130, 131, z.B. M-förmig gestaltete Blattfeder, in die Neutralstellung D) zurückbewegt und dort gehalten. Eine Rastierung kann dann entfallen. Alle anderen beschriebenen Eigenschaften bleiben hierbei erhalten.

### Bezugszeichenliste

- 1: erste Kurbelwelle
- 2: zweite Kurbelwelle
- 3: erster Kulissenhebel
- 4: zweiter Kulissenhebel
- 5: erste Drehachse
- 6: zweite Drehachse
- 7, 8: Betätigungsnocken
- 9, 10: Schalter
- 11: Hubmagnet
- 12: elektrisch betriebenes Sperrelement
- 13, 14: Arretierelement
- 15, 16: Bohrung des Arretierelements
- 17, 18: Griff
- 19, 20: Öffnung der Deckplatte 200
- 21: Berührungsbereich des ersten Kulissenhebels 3
- 22: Berührungsbereich des zweiten Kulissenhebels 4
- 23: Verriegelungsvorsprung des ersten Kulissenhebels 3
- 24: Verriegelungsvorsprung des zweiten Kulissenhebels 4
- 25, 26: Stopper
- 101: erste Kurbelwelle
- 102: zweite Kurbelwelle
- 103: erste Kulisse
- 104: zweite Kulisse
- 105: Schiene zur Führung der ersten Kulisse
- 106: Schiene zur Führung der zweiten Kulisse
- 107, 108: Betätigungsnocken
- 109, 110: Schalter
- 111: Hubmagnet
- 112: elektrisch betriebenes Sperrelement
- 113, 114: Arretierelement
- 115, 116: Bohrung des Arretierelements
- 117, 118: Griff
- 119, 120: Öffnung im der Deckplatte 200
- 121: Berührungsbereich der ersten Kulisse 103
- 122: Berührungsbereich der zweiten Kulisse 104
- 123: Verriegelungsbereich der ersten Kulisse 103
- 124: Verriegelungsbereich der zweiten Kulisse 104
- 125, 126: Stopper
- 130, 131: Rückholfeder
- 200: Deckplatte
- 201, 202: Öffnung der Deckplatte 200
- 203, 204: dritte Ausnehmung in den Kulissen
- 205, 206: erste Ausnehmungen in den Kulissen
- 207: Freiraum
- 301: Betätigungselement des elektrischen Schalters 109
- 302: Betätigungselement des elektrischen Schalters 110
- 303, 304: zweite Ausnehmung in den Kulissen
- 401: erste Funktionseinheit des Schaltgeräts
- 402: zweite Funktionseinheit des Schaltgeräts

## Patentansprüche

1. Schaltgerät für eine elektrische Schaltanlage zur Energieverteilung
- mit einer Funktionseinheit für die Funktion Erden und einer Funktionseinheit für die Funktion Trennen, wobei
- jede Funktionseinheit ein bewegliches Bedienelement aufweist,
- ein Handbetrieb für jede der beiden Funktionseinheiten einstellbar ist, wobei
- bei der Einstellung des Handbetriebes einer der beiden Funktionseinheiten durch das bewegliches Bedienelement dieser Funktionseinheit die Einstellung des Handbetriebs der anderen Funktionseinheit blockiert wird,
**dadurch gekennzeichnet, dass** das Schaltgerät ein elektrisch betriebenen Sperrelement (12, 112) umfasst, wobei
- durch das elektrisch betriebene Sperrelement (12, 112) das bewegliche Bedienelement einer Funktionseinheit für die Versetzung in die Handbetrieb-Stellung verriegelbar ist, und wobei
- Mittel zur Abfrage einer Sicherheitsinformation und zum elektrischen Entriegeln des Bedienelements in Abhängigkeit von der Sicherheitsinformation vorgesehen sind.

2. Schaltgerät nach Anspruch 1, wobei
- das bewegliche Bedienelement jeder Funktionseinheit in den folgenden Betriebsstellungen arretierbar ist:
A) Handbetrieb-Stellung,
B) Neutralstellung, in der die Schaltanlage elektrisch betrieben wird,
C) Blockiert-Stellung, in der die Funktionseinheit blockiert ist, wobei
- in der Blockier-Stellung und der Neutralstellung die beweglichen Bedienelemente dieser Funktionseinheit einander nicht blockieren.

3. Schaltgerät nach einem der vorstehenden Ansprüche, wobei
- jedes Bedienelement eine Kulisse (3, 4, 103, 104) umfasst, wobei die Kulissen (3, 4, 103, 104) der beiden Bedienelemente zueinander bewegbar sind, wobei
- bei der Handbetrieb-Stellung einer Kulisse (3, 103) das Versetzen der anderen Kulisse (4, 104) in die Handbetrieb-Stellung blockiert ist.

4. Schaltgerät nach Anspruch 3, wobei
- das elektrisch betriebene Sperrelement (12) zwischen den Kulissen (3, 4, 103, 104) der ersten und zweiten Funktionseinheit angeordnet ist.

5. Schaltgerät nach einem der vorstehenden Ansprüche, wobei
- jedes bewegliche Bedienelement einen Betätigungsnocken (107, 108) aufweist, der beim Verschieben des Bedienelements in die Stellung A) das Betätigungselement (301, 302) eines elektrischen Schalters (9, 10, 109, 110) bewegt.

6. Schaltgerät nach Anspruch 5, wobei
- der elektrische Schalter (109, 110) mit einer Sicherheitsschaltung zur Auswertung der Sicherheitsinformation elektrisch verbunden ist.

7. Schaltgerät nach einem der Ansprüche 3 bis 6, wobei
- die Kulissen (103, 104) in einer Richtung gegeneinander verschiebbar sind.

8. Schaltgerät nach einem der Ansprüche 3 bis 6, wobei
- die Kulissen (3, 4) gegeneinander schwenkbar sind.

9. Schaltgerät nach einem der Ansprüche 3 bis 8, wobei
- jede Funktionseinheit eine manuell zu betätigende Handkurbelwelle (1, 2) umfasst, die in der Stellung B) und C) des Bedienelements durch die Kulissen (3, 4, 103, 104) dieses Bedienelements abgedeckt ist, wobei
- jede Kulisse (3, 4, 103, 104) eine Ausnehmung (303, 304) aufweist, die in der Handbetrieb-Stellung so positioniert ist, dass die Handkurbelwelle (1, 2) freigelegt ist.

10. Schaltgerät nach Anspruch 9,
- wobei jedes Bedienelement einen Stopper (25, 26) umfasst, der in Stellung C) des Bedienelements die zugehörige Handkurbelwelle (1, 2) blockiert.

11. Schaltgerät nach einem der Ansprüche 8 bis 10, wobei
- jede Kulisse (3) einen Vorsprung (23, 24) aufweist, der beim Einstellen der Position A) in eine Ausnehmung (205, 206) der anderen Kulisse (4) schwenkbar ist und das Einstellen der Stellung A) der anderen Kulisse blockiert.

12. Schaltgerät nach einem der Ansprüche 8 bis 11, wobei
- die Schaltung zur Auswertung der Sicherheitsinformation mit einem Hubmagnet (11, 111) elektrisch verbunden ist, der in der Lage ist, das Sperrelement (12, 112) zu verschieben.

13. Schaltgerät nach Anspruch 7, wobei
- zwischen den Kulissen (1, 2, 101, 102) in Stellung B) ein Freiraum (207) vorhanden ist, der durch Verschieben einer der Kulissen in Stellung A) soweit abgedeckt wird, dass ein Verschieben der anderen Kulisse in Stellung A) blockiert ist.

## Claims

1. Switching device for an electrical switchgear assembly for power distribution
- having a function unit for the function of grounding and a function unit for the function of isolation, wherein
- each function unit has a moving control element,
- manual operation can be selected for each of the two function units, wherein
- when manual operation is selected for one of the two function units, the selection of manual operation for the other function unit is blocked by the moving control element of this function unit,
**characterized in that** the switching device comprises an electrically operated blocking element (12, 112),
wherein
- the moving control element of a function unit can be locked for switching to the manual operation position by means of the electrically operated blocking element (12, 112), and wherein
- means are provided for checking safety information and for electrical unlocking of the control element as a function of the safety information.

2. Switching device according to Claim 1, wherein
- the moving control element of each function unit can be locked in the following operating positions:
A) manual operation position,
B) neutral position, in which the switchgear assembly is operated electrically,
C) blocked position, in which the function unit is blocked, wherein
- the moving control elements of this function unit do not block one another in the blocking position and the neutral position.

3. Switching device according to one of the preceding claims, wherein
- each control element comprises a gate (3, 4, 103, 104), wherein the gates (3, 4, 103, 104) of the two control elements can be moved with respect to one another, wherein
- the switching of the other gate (4, 104) to the manual operation position is blocked when one gate (3, 103) is in the manual operation position.

4. Switching device according to Claim 3, wherein
- the electrically operated blocking element (12) is arranged between the gates (3, 4, 103, 104) of the first and second function units.

5. Switching device according to one of the preceding claims, wherein
- each moving control element has an operating cam (107, 108) which, when the control element is moved to the position A), moves the operating element (301, 302) of an electrical switch (9, 10, 109, 110).

6. Switching device according to Claim 5, wherein
- the electrical switch (109, 110) is electrically connected to a safety circuit for evaluation of the safety information.

7. Switching device according to one of Claims 3 to 6, wherein
- the gates (103, 104) can be moved in one direction with respect to one another.

8. Switching device according to one of Claims 3 to 6, wherein
- the gates (3, 4) can be pivoted with respect to one another.

9. Switching device according to one of Claims 3 to 8, wherein
- each function unit comprises a hand crankshaft (1, 2) which can be operated manually and which, when the control element is in the positions B) and C), is covered by the gates (3, 4, 103, 104) of this control element, wherein
- each gate (3, 4, 103, 104) has a recess (303, 304) which is positioned in the manual operation position such that the hand crankshaft (1, 2) is exposed.

10. Switching device according to Claim 9,
- wherein each control element comprises a stopper (25, 26) which, when the control element is in position C), blocks the associated hand crankshaft (1, 2).

11. Switching device according to one of Claims 8 to 10, wherein
- each gate (3) has a projection (23, 24) which can be pivoted into a recess (205, 206) in the other gate (4) on selection of position A), and blocks the selection of the position A) of the other gate.

12. Switching device according to one of Claims 8 to 11, wherein
- the circuit for evaluation of the safety information is electrically connected to a solenoid (11, 111) which is able to move the blocking element (12, 112).

13. Switching device according to Claim 7, wherein
- a free space (207) is provided between the gates (1, 2, 101, 102) in position B), which free space is covered by movement of one of the gates to position A) to such an extent that movement of the other gate to position A) is blocked.

## Revendications

1. Appareil de commutation pour installation électrique de raccordement servant à la distribution d'énergie, présentant une unité fonctionnelle assurant la fonction de mise à la terre et une unité fonctionnelle assurant la fonction de coupure,
chaque unité fonctionnelle présentant un élément mobile de service,
un fonctionnement manuel de chacune des deux unités fonctionnelles pouvant être établi et
l'établissement du fonctionnement manuel de l'autre unité fonctionnelle étant bloqué lors de l'établissement du fonctionnement manuel de l'une des deux unités fonctionnelles par l'élément mobile de service de cette unité fonctionnelle,
**caractérisé en ce que**
l'appareil de branchement comprend un élément de blocage (12, 112) entraîné électriquement,
en cde que l'élément mobile de service d'une unité fonctionnelle peut être verrouillé pour être amené en position de fonctionnement manuel par l'élément de blocage (12, 112) à entraînement électrique et
**en ce que** des moyens d'interrogation d'une information de sécurité et de déverrouillage électrique de l'élément de service en fonction de l'information de sécurité sont prévus.

2. Appareil de branchement selon la revendication 1, dans lequel l'élément mobile de service de chaque unité fonctionnelle peut être bloqué dans les positions de fonctionnement suivantes :
A) position de fonctionnement manuel,
B) position neutre dans laquelle l'installation de branchement est entraînée électriquement,
C) position bloquée dans laquelle l'unité fonctionnelle est bloquée,
les éléments mobiles de service de cette unité fonctionnelle ne se bloquant pas mutuellement dans la position de blocage et dans la position neutre.

3. Appareil de branchement selon l'une des revendications précédentes, dans lequel chaque élément de service comporte un coulisseau (3, 4, 103, 104), les coulisseaux (3, 4, 103, 104) des deux éléments de service pouvant se déplacer l'un par rapport à l'autre et le déplacement de l'autre coulisseau (4, 104) dans la position de fonctionnement manuel étant bloqué en position de fonctionnement manuel d'un coulisseau (3, 103).

4. Appareil de branchement selon la revendication 3, dans lequel l'élément de blocage (12) entraîné électriquement est disposé entre les coulisseaux (3, 4, 103, 104) de la première et de la deuxième unité fonctionnelle.

5. Appareil de branchement selon l'une des revendications précédentes, dans lequel chaque élément mobile de service présente une came d'actionnement (107, 108) qui déplace l'élément d'actionnement (301, 302) d'un commutateur électrique (9, 10, 109, 110) lors du déplacement de l'élément de service dans la position A).

6. Appareil de branchement selon la revendication 5, dans lequel le commutateur électrique (109, 110) est raccordé électriquement à un circuit de sécurité qui évalue la formation de sécurité.

7. Appareil de branchement selon l'une des revendications 3 à 6, dans lequel les coulisseaux (103, 104) peuvent se déplacer l'un vers l'autre dans une direction.

8. Appareil de branchement selon l'une des revendications 3 à 6, dans lequel les coulisseaux (3, 4) peuvent pivoter l'un par rapport à l'autre.

9. Appareil de branchement selon l'une des revendications 3 à 8, dans lequel chaque unité fonctionnelle comporte une manivelle (1, 2) actionnée manuellement qui est recouverte dans les positions B) et C) de l'élément de service par les coulisseaux (3, 4, 103, 104) de cet élément de service, chaque coulisseau (3, 4, 103, 104) présentant une découpe (303, 304) disposée dans la position de fonctionnement manuel de telle sorte que la manivelle (1, 2) soit libérée.

10. Appareil de branchement selon la revendication 9, dans lequel chaque élément de service présente un arrêt (25, 26) qui bloque la manivelle (1, 2) associée lorsque l'élément de service est en position C).

11. Appareil de branchement selon l'une des revendications 8 à 10, dans lequel chaque coulisseau (3) présente une saillie (23, 24) qui, lorsque la position A) est prise, peut pivoter dans une découpe (205, 206) ménagée dans l'autre coulisseau (4) et qui bloque l'établissement de la position A) de l'autre coulisseau.

12. Appareil de branchement selon l'une des revendications 8 à 11, dans lequel le circuit d'évaluation de la formation de sécurité est raccordé électriquement à un aimant mobile (11, 111) apte à déplacer l'élément de blocage (12, 112).

13. Appareil de branchement selon la revendication 7, dans lequel un espace libre (207) couvert par le déplacement d'un des coulisseaux dans la position A) de telle sorte que le déplacement de l'autre coulisseau dans la position A) soit bloqué est prévu en position B) entre les coulisseaux (1, 2, 101, 102).
